# FASCICULE DE BREVET EUROPEEN

(11) **EP 1 292 767 B1**
(45) Date de publication et mention de la délivrance du brevet: **16.03.2005**
(21) Numéro de dépôt: 01943572.6
(22) Date de dépôt: 06.06.2001
(51) Int. Cl.: F03D 11/00, F03D 9/00

(54) **DISPOSITIF DE PRODUCTION DE COURANT ELECTRIQUE A PARTIR D'ENERGIE EOLIENNE**
WINDTURBINE
DEVICE FOR PRODUCING ELECTRIC CURRENT FROM WIND ENERGY

(30) Priorité: 19.06.2000 FR 0007813
(43) Date de publication de la demande: 19.03.2003
(73) Titulaire: JEUMONT S.A., 92400 Courbevoie (FR)
(72) Inventeur: CANINI, Jean-Marc, F-59149 Aibes (FR); MILET, Yves, F-59740 Solre le Chateau (FR); BRUTSAERT, Patrick, F-59245 Recquignies (FR)
(74) Mandataire: Jacobson, Claude
(86) Numéro de dépôt international: PCT/FR2001/001747
(87) Numéro de publication internationale: WO 2001/098655

(56) Documents cités:
- EP-A- 0 864 748
- DE-A- 4 402 184
- FR-A- 2 796 671
- GB-A- 2 201 200
- US-A- 5 208 522
- US-A- 5 269 652
- E. HAU: "Windkraftanlagen" 1996 , SPRINGER VERLAG , BERLIN XP002160649 241430 page 246 -page 247 *Bild 8.29 unten* page 249; figure 8.30

## Description

L'invention concerne un dispositif de production de courant électrique à partir d'énergie éolienne.

On connaît des dispositifs de captage de l'énergie fournie par le vent, ou éoliennes, par example du document EP-A-0 864 748, qui comportent un mât vertical fixé au sol ou au fond de la mer, ou encore sur une plate-forme flottante, par son extrémité inférieure et une nacelle montée rotative autour d'un axe vertical sur une partie d'extrémité supérieure du mât. Sur la nacelle est montée rotative autour d'un axe sensiblement horizontal ou peu incliné par rapport à l'horizontale, la partie tournante de l'éolienne qui comporte un moyeu et au moins deux pales fixées sur le moyeu dans des directions radiales par rapport à l'axe de rotation du moyeu. Le moyeu est monté rotatif sur la nacelle, par l'intermédiaire d'au moins un palier. La production de courant électrique à partir de l'énergie éolienne captée par la partie tournante de l'éolienne est assurée par une génératrice tel qu'un alternateur pouvant comporter au moins un stator solidaire de la nacelle et au moins un rotor solidaire du moyeu de la partie tournante de l'éolienne.

Un des problèmes rencontrés par les fabricants d'éoliennes est relatif à la nécessité d'obtenir des puissances électriques importantes, tout en limitant la taille de la génératrice électrique qui influe sur la taille de la nacelle. Il est connu que les génératrices de type discoïde, c'est-à-dire des machines comportant au moins un rotor et au moins un stator qui ont des faces annulaires en vis-à-vis sur lesquelles sont disposés des éléments magnétiques ou électromagnétiques coopérant pour la production de courant électrique, peuvent présenter certains avantages du fait qu'on peut obtenir une surface utile de la machine relativement importante dans un faible volume. Ces dispositifs sont particulièrement avantageux, lorsque le rotor de la génératrice est fixé directement sur la partie tournante de l'éolienne et qu'on évite ainsi l'utilisation d'un multiplicateur de vitesse de type mécanique.

Cependant, cette technique n'a pas été utilisée jusqu'ici de manière courante, à l'échelle industrielle, du fait qu'il est difficile de concevoir un montage rotatif de la partie tournante et du rotor, de telle manière qu'on puisse contrecarrer et/ou équilibrer les forces, en particulier les forces axiales s'exerçant sur la partie tournante, de manière à maintenir la position du ou des rotors par rapport aux disques statoriques.

La partie tournante de l'éolienne est soumise à des efforts exercés par le vent qui produisent en particulier une flexion du moyeu et de ses moyens de support rotatifs, même dans le cas où un ou plusieurs paliers de butée assurent la compensation des forces axiales exercées sur la partie tournante.

Dans le cas où le rotor de la génératrice est fixé sur la partie tournante de l'éolienne, ces efforts exercés par le vent sur la partie tournante sont transmis directement au rotor de la génératrice, de sorte qu'il est difficile de maintenir la largeur des entrefers de la génératrice à des valeurs faibles et précises, dans le cas d'une machine discoïde comportant un ou plusieurs disques rotors en vis-à-vis d'un ou plusieurs disques stators.

En outre, la partie tournante de l'éolienne et en particulier le rotor subissent pendant le fonctionnement de l'éolienne des efforts et déformations alternés qui se traduisent par une fatigue de ces pièces en service.

On connaît d'autre part des dispositifs de production de courant électrique à partir d'énergie éolienne comportant un alternateur de type classique à flux radial dont la partie tournante est montée rotative sur la nacelle par l'intermédiaire d'un palier tel qu'un palier à roulement fixé sur un arbre solidaire de la nacelle réalisé sous forme tubulaire et présentant un axe faiblement incliné par rapport à l'horizontale. Le moyeu de la partie tournante de l'éolienne est solidaire d'un support tubulaire monté rotatif sur la bague externe du palier et portant le rotor de la génératrice électrique de type radial sur une partie d'extrémité opposée au moyeu portant les pales. Dans ce cas, le vent exerce, par l'intermédiaire des pales et du moyeu une force tendant à faire pivoter le rotor autour du palier de la partie tournante, par rapport à un axe perpendiculaire à l'axe du palier.

Le moyeu portant les pales du rotor fixé en porte-à-faux par rapport au palier exerce en outre un couple important sur le palier et la structure de support de l'éolienne.

Le fait qu'on trouve sur le marché, à l'heure actuelle, des aimants permanents très performants permet d'envisager la réalisation de génératrices électriques de type discoïde comportant un rotor portant des aimants permanents. Dans ce cas, on peut réaliser les rotors et les stators des machines discoïdes de manière à limiter le poids et la longueur totale des génératrices électriques.

La réalisation d'une éolienne comportant une structure permettant d'utiliser une machine génératrice de courant électrique de type discoïde à aimants permanents présente donc un très grand avantage.

Le but de l'invention est donc de proposer un dispositif de production de courant électrique à partir d'énergie éolienne comportant un mât vertical fixé sur une surface de support telle que le sol, le fond de la mer ou une plate-forme flottante, par une partie d'extrémité inférieure, une nacelle montée rotative autour d'un axe vertical sur une partie d'extrémité supérieure du mât, une partie tournante comprenant un moyeu et au moins deux pales fixées sur le moyeu dans des directions sensiblement radiales, au moins un palier de montage rotatif de la partie tournante sur la nacelle ayant un axe peu incliné par rapport à l'horizontale et une génératrice de courant électrique comportant au moins un stator solidaire de la nacelle et au moins un rotor solidaire du moyeu de la partie tournante par l'intermédiaire d'un élément de fixation sensiblement perpendiculaire à l'axe de rotation de la partie tournante, ce dispositif permettant d'obtenir une forte puissance installée sous un volume faible de la nacelle.

Dans ce but :
- le rotor et le stator présentent chacun au moins une partie active en forme de disque portant des éléments électromagnétiques en vis-à-vis,
- la partie tournante est montée rotative sur la nacelle par l'intermédiaire d'un seul palier dont le diamètre est inférieur de moins de 20 % au diamètre d'un cercle inscrit dans la section droite perpendiculaire à l'axe de rotation de la partie tournante, d'une surface formée par des zones de fixation des pales sur le moyeu, et
- l'élément de fixation du rotor sur le moyeu est dans une disposition adjacente par rapport au palier, dans la direction axiale du palier.

Afin de bien faire comprendre l'invention, on va décrire à titre d'exemple, en se référant à la figure jointe en annexe, un mode de réalisation d'un dispositif de production de courant électrique suivant l'invention.

La figure unique est une vue en élévation et en coupe par un plan vertical de la partie supérieure d'une éolienne réalisée suivant l'invention.

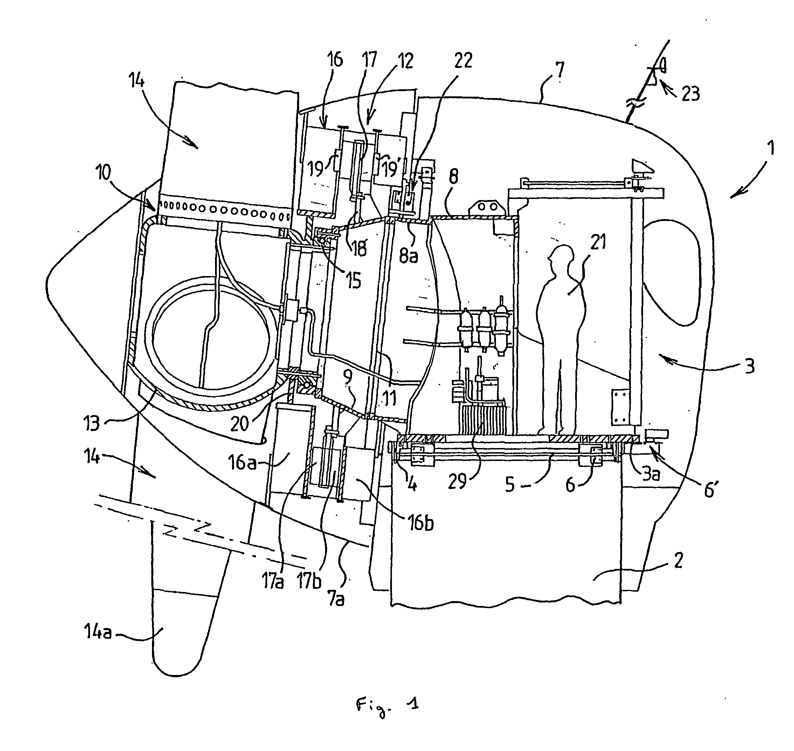

Sur la figure 1, on a représenté la partie supérieure d'une éolienne selon l'invention désignée de manière générale par le repère 1.

L'éolienne 1 comporte un mât vertical 2 dont seule la partie d'extrémité supérieure a été représentée sur la figure 1.

Le mât 2 dont on n'a représenté que la partie supérieure sur la figure 1 peut présenter une très grande hauteur, par exemple une hauteur de l'ordre de 40 à 50 m, la partie inférieure du mât étant fixée dans un massif d'ancrage sur le sol du site de production d'énergie éolienne, ou encore au fond de la mer ou sur une plate forme flottante, dans le cas d'une installation en mer.

Sur la partie supérieure du mât 2 représenté sur la figure 1 est montée une nacelle 3 qui comporte une plate-forme 3a montée rotative sur la partie supérieure du mât 2 par l'intermédiaire d'une couronne à roulement 4 et maintenue par des tirants, de manière que la nacelle 3 soit montée rotative autour de l'axe vertical du mât 2 et supportée par la partie d'extrémité supérieure du mât 2. Un frein à disque 5 comportant des étriers 6 répartis suivant la périphérie d'une couronne solidaire de la plate-forme 3a permet de freiner la nacelle, lors de ses déplacements en rotation autour de l'axe vertical du mât 2 commandés par des motoréducteurs d'entraînement 6'.

La plate-forme 3 comporte une enveloppe profilée 7 ou carène assurant la protection des composants de l'éolienne disposés dans la nacelle.

La plate-forme 3a de la nacelle assure en particulier le support du bâti principal 8 de la nacelle et de la centrale hydraulique 29 d'alimentation du frein 6 du système d'orientation de la nacelle autour de l'axe vertical du mât et d'un frein de ralentissement et d'arrêt d'une partie tournante 10 de la nacelle qui sera décrite par la suite, ainsi que du système, de refroidissement de la génératrice électrique de l'éolienne, d'un boîtier renfermant l'électronique de commande de l'éolienne, et d'un boîtier renfermant un convertisseur électrique du courant produit par la génératrice et de différents accessoires permettant le réglage de l'éolienne en fonctionnement.

Sur le bâti principal 8 de la nacelle est fixé, par l'intermédiaire d'une pièce de raccordement 8a de forme cylindrique, le bâti 9 de support du stator 17 de la génératrice électrique, réalisé sous la forme d'une pièce tubulaire de forme tronconique. La pièce de raccordement cylindrique 8a et le bâti 9 de la partie statorique de la génératrice sont disposés avec leurs axes alignés et légèrement inclinés par rapport à l'horizontale et sont raccordés suivant un plan de raccordement 11 légèrement incliné par rapport au plan vertical.

L'éolienne comporte une partie tournante désignée de manière générale par le repère 10 qui comporte en particulier un moyeu 13 monté rotatif autour de l'axe commun au bâti 9 et à la pièce de raccordement 8a légèrement incliné par rapport à l'horizontale, par l'intermédiaire d'un palier unique 15 constitué de préférence par un roulement de grande dimension.

Sur le moyeu 13 sont fixées les pales 14 de la partie tournante de l'éolienne sur lesquelles s'exerce la force du vent mettant en rotation la partie tournante 10 de l'éolienne.

Dans le cas du mode de réalisation représenté, le moyeu 13 comporte trois zones annulaires planes de fixation d'une pale 14 réparties autour de l'axe du moyeu dans des dispositions sensiblement à 120° sur trois faces planes du moyeu 13 constituant une surface prismatique dont la section droite par un plan perpendiculaire à l'axe de la partie tournante 10 est un triangle équilatéral situé dans un plan perpendiculaire à l'axe du moyeu et centré par rapport à celui-ci.

La partie tournante 10 de l'éolienne comporte également le rotor 16 de la génératrice électrique 12 de l'éolienne dont le stator 17 est fixé sur le bâti support 9, par l'intermédiaire d'une bride 18 de forme annulaire et perpendiculaire à l'axe du bâti support 9.

Le rotor 16 et le stator 17 comportent chacun deux éléments 16a, 16b ou 17a, 17b dont les parties actives sont réalisées sous forme de disques et placées en vis-à-vis. Le rotor double 16 comporte deux faces actives en forme de disques dont l'une est située sur l'élément 16a et placée en vis-à-vis de la face active de l'élément 17a du stator et dont l'autre est disposée sur l'élément 16b en vis-à-vis de la face active de l'élément 17b du stator. Les éléments 17a et 17b du stator sont placés de part et d'autre d'un support solidaire de la bride 18 de fixation du stator sur le bâti 9.

Sur les faces actives des éléments 16a et 16b du rotor double 16, sont fixés, dans des dispositions successives suivant la circonférence des faces actives, des aimants permanents 19 et 19' qui peuvent être par exemple des aimants en un matériau tel que le néodyme fer bore (Nd Fe B).

Les faces actives des éléments 17a et 17b du stator disposées en vis-à-vis des faces actives des éléments correspondants 16a et 16b du rotor sont constituées par des bobinages insérés dans des encoches d'un noyau statorique constitué par une bande en tôle magnétique enroulée sur elle-même.

L'utilisation d'aimants permanents sur les faces actives du rotor permet de réaliser une génératrice électrique 12 présentant un très faible pas polaire. On diminue ainsi la masse et l'encombrement de la génératrice électrique 12, pour une puissance installée donnée.

Les aimants 19 et 19' des éléments 16a et 16b du rotor double 16 sont d'une épaisseur faible par rapport à l'ensemble de l'épaisseur des éléments 16a et 16b du rotor, la plus grande partie de la masse du rotor étant constituée par une armature en acier sur laquelle sont logés les aimants permanents, cette armature assurant la résistance mécanique dudit rotor.

Les armatures des éléments 16a et 16b du rotor sont reliées entre elles suivant la partie périphérique externe du rotor de forme globalement annulaire, de telle manière que les faces actives des éléments 16a et 16b du rotor portant les aimants permanents 19 et 19' se trouvent en vis-à-vis et à une distance l'une de l'autre supérieure à l'épaisseur totale du stator 17. De cette manière, on peut réaliser le montage de la génératrice 12 représentée sur la figure, les éléments du rotor 16 venant chevaucher le stator 17 qui est intercalé entre les éléments 16a et 16b du rotor 16. On obtient ainsi un montage compact de la génératrice électrique, avec une surface utile totale correspondant à la somme des surfaces actives des éléments rotoriques et statoriques.

L'armature de l'élément 16a du rotor disposée vers l'avant, c'est-à-dire vers l'ensemble comportant le moyeu 13 et les pales 14 de l'éolienne, est solidaire d'une bride 20 de forme générale annulaire par l'intermédiaire de laquelle on assure la fixation du rotor 16 sur le moyeu 13 et sur la partie interne tournante du palier 15.

Le palier 15 réalisé sous la forme d'un roulement comporte une partie externe ou bague externe fixée de manière rigidement solidaire sur la partie d'extrémité antérieure du bâti support 9, dans une disposition coaxiale au bâti support 9 et une partie interne ou bague interne qui est montée tournante par rapport à la bague externe, par l'intermédiaire des éléments de roulement du palier 15.

L'assemblage du moyeu 13 et du rotor 16, par l'intermédiaire de la bride de fixation 20, et de la bague interne tournante du palier 15 est réalisé par exemple par des tirants qui permettent un assemblage rigide et résistant. L'assemblage est réalisé de manière que le moyeu portant les pales 14, le rotor 16 et le palier 15 soient parfaitement coaxiaux.

Le palier 15 est un palier à roulement de grande dimension dont le diamètre est sensiblement égal ou un peu inférieur au diamètre du cercle inscrit dans le triangle équilatéral constituant la section droite de la surface prismatique formée par les faces planes de raccordement des pales 14 sur le moyeu 13. Dans tous les cas, le diamètre du palier, c'est-à-dire le diamètre du cercle passant par les centres des éléments de roulement, n'est que très légèrement inférieur, de moins de 20 % ou de préférence de moins de 10%, au diamètre du cercle inscrit dans la section droite d'une surface formée par les zones de raccordement des pales.

En outre, comme il est visible sur la figure, la bride 20 de raccordement du rotor 16 de forme annulaire comporte une partie interne qui est intercalée entre le moyeu 13 et la bague interne tournante du palier 15 et située de manière immédiatement adjacente au palier 15, dans la direction axiale commune au palier 15, au rotor 16 et au moyeu 13.

L'élément de fixation 20 du rotor est fixé rigidement au moyeu 13 et au palier 15, par exemple par l'intermédiaire de tirants.

L'ensemble des composants sensibles de l'éolienne disposés dans la nacelle est protégé par l'enveloppe de nacelle 7 qui comporte une partie antérieure 7a solidaire de la partie tournante 10 de l'éolienne. Une étanchéité est assurée entre la partie de l'enveloppe de carénage de la nacelle solidaire de la plate-forme 3a et la partie d'enveloppe de carénage 7a solidaire de la partie tournante 10 de l'éolienne.

Les pales 14 de l'éolienne sont montées sur le moyeu 13, soit de manière fixe, soit de manière à pouvoir être orientées de façon automatique en fonction de la vitesse du vent et de la vitesse de rotation de l'éolienne et à réaliser un décrochage, lorsque la vitesse de rotation de l'éolienne ou la vitesse du vent atteint une valeur critique. On obtient ainsi une parfaite sécurité de fonctionnement de l'éolienne.

On peut remarquer que l'utilisation d'un seul palier 15 de grande dimension pour le montage de la partie tournante de l'éolienne et la réalisation sous forme creuse du bâti support du stator et du palier 15 permet à un opérateur 21 d'accéder par l'intérieur, depuis la plate-forme 3a, aux zones de raccordement des pales 14 sur le moyeu 13, par exemple pour effectuer des contrôles et réparations.

Chacune des pales 14 de l'éolienne comporte une partie d'extrémité 14a qui peut être orientée de manière automatique autour de l'axe longitudinal de direction radiale de la pale 14. correspondante, par l'intermédiaire d'une tringlerie. On réalise ainsi un freinage aérodynamique de la partie tournante de l'éolienne, l'extrémité 14a des pales14 de l'éolienne étant déplacée par pivotement autour de l'axe longitudinal de la pale, sur ordre du système de contrôle général de l'éolienne en fonction de la vitesse du vent ou de la vitesse de rotation de la partie tournante 10 ou en cas de survitesse de la partie tournante, par effet centrifuge.

L'éolienne comporte également un frein mécanique 22 constitué sous la forme d'un frein à disque dont le disque est solidaire de l'élément 16b du rotor 16 et placé dans une disposition coaxiale par rapport au rotor. Le frein à disque 22 comporte de plus une pluralité d'étriers répartis suivant la périphérie externe de la pièce de raccordement 8a du bâti principal 8 de la nacelle, de manière à venir en prise avec le disque solidaire du rotor pour réaliser le freinage du rotor et de l'ensemble de la partie tournante de l'éolienne ou éventuellement l'arrêt de l'éolienne.

La combinaison du freinage aérodynamique et du freinage mécanique permet d'accroître la sécurité de fonctionnement de l'éolienne. En outre, l'intégration du frein à disque au rotor de la génératrice électrique 12 de l'éolienne permet une réalisation compacte et un gain de place à l'intérieur de la nacelle.

De plus, pour permettre le pilotage et le contrôle de l'éolienne, la nacelle porte une antenne sur laquelle sont fixés une girouette 23 et un anémomètre permettant de déterminer de manière précise la direction et la vitesse du vent.

L'orientation de l'éolienne face au vent est réalisée à l'aide d'un asservissement en position de la nacelle à partir d'une information donnée par la girouette 23. Lorsqu'un écart angulaire supérieur à une certaine limite entre la position de l'éolienne et la direction du vent donnée par la girouette est détecté, des motoréducteurs électriques sont actionnés pour déplacer la nacelle en rotation autour de l'axe vertical du mât 2, de manière à remettre la partie antérieure de la nacelle face au vent. Le déplacement de la nacelle est amorti et freiné par le frein à disque 5, 6 actionné hydrauliquement. La nacelle peut tourner sur elle-même jusqu'à un certain nombre de fractions de tour ou un certain nombre de tour, par exemple trois tours, avant qu'une procédure automatique arrête l'éolienne et la remette dans sa position initiale. Ce procédé automatique permet d'éviter toute détérioration dû à un enroulement trop important des câbles reliant la nacelle 3 et le mât 2.

Lorsque l'éolienne est en fonctionnement, sa partie antérieure étant dirigée face au vent, la partie tournante est mise en rotation par action du vent sur les pales 14. Le rotor 16, mis en rotation en vis-à-vis du stator 17, crée un champ tournant qui induit des forces électromotrices dans les bobinages du stator. Un courant est récupéré et transformé par une électronique de puissance, de manière à fournir du courant électrique à un réseau. Le boîtier électronique de commande de la génératrice de l'éolienne permet de piloter les composants de l'électronique de puissance pour fournir au réseau un courant ayant une fréquence constante, quelle que soit la vitesse de rotation de la partie tournante de l'éolienne et d'optimiser le fonctionnement de la génératrice en fonction de la vitesse du vent et de la partie tournante 10 de l'éolienne.

Le rotor 16 de la génératrice électrique 12 qui est solidaire du moyeu 13 portant les pales 14 est donc entraîné directement en rotation à la vitesse de la partie tournante, ce qui évite toute utilisation d'un dispositif mécanique de transmission tel qu'un multiplicateur.

Les variations de vitesse de la partie tournante 10 de l'éolienne sont compensées par l'électronique de puissance permettant de transformer le courant fourni par la génératrice électrique 12.

Le vent exerce non seulement des forces permettant de faire tourner la partie tournante de l'éolienne mais également des efforts dans la direction axiale qui doivent être repris pour éviter tout déplacement et toute déformation des composants de la partie tournante de l'éolienne et en particulier du rotor 16.

La liaison rigide du moyeu 13 et de la bague tournante du palier 15 permet une reprise directe des efforts axiaux au niveau du palier 15, par la structure de support de la nacelle comportant le bâti support 9 et le bâti principal 8. Il ne se produit donc aucun déplacement des éléments du rotor dans la direction axiale, de sorte que l'entrefer peut être maintenu à une valeur parfaitement constante.

L'entrefer entre les éléments rotoriques et les éléments statoriques peut être réglé de manière que le stator exerce sur le rotor des forces magnétiques de direction axiale qui compensent au moins partiellement l'action du vent dans la direction axiale. Le palier 15 subit donc des contraintes minimales. En outre, la distance suivant leur axe commun du moyeu et du palier 15 peut être fixée à une valeur très faible, de sorte que le moyeu 13 et les pales 14 adjacents au palier 15 ne sont que très faiblement en porte-à-faux par rapport au palier 15, ce qui réduit encore les contraintes subies par le palier 15.

La fixation du rotor 16 sur le moyeu 13 et la partie tournante du palier, dans une position immédiatement adjacente au palier, permet également de limiter très fortement les déformations et les contraintes de fatigue subies en service par le rotor 16.

En effet, dans le cas où le vent exerce une force de flexion sur le moyeu 13, par l'intermédiaire des pales 14, autour d'un axe perpendiculaire à l'axe de rotation de la partie tournante 10 de l'éolienne, le rotor 16 subit un déplacement très faible et pratiquement négligeable, du fait qu'il est relié au moyeu 13, dans une position immédiatement adjacente au palier 15. Le palier 15 reprend les efforts de flexion, sans qu'ils soient transmis au rotor 16. On évite ainsi tout déplacement du rotor 16 modifiant l'entrefer et occasionnant une détérioration du rotor par fatigue.

Comme expliqué plus haut, l'un des avantages du montage de la partie tournante 10 de l'éolienne sur la partie fixe, par l'intermédiaire d'un seul palier de grand diamètre avec une fixation du rotor de la génératrice électrique dans une position adjacente au palier est de permettre une transmission directe des forces exercées par le vent sur la partie tournante à la partie fixe de la nacelle 3, sans transiter par la structure de la génératrice électrique qui est donc soumise à des contraintes plus faibles et qui peut être réalisée sous une forme plus légère. D'autre part, le roulement constituant le palier 15 est constamment chargé et tout risque d'usure prématurée due à un chargement trop faible des éléments de roulement est ainsi évité.

En outre, le bon fonctionnement du roulement unique constituant le palier 15 est assuré par un système automatique de lubrification permettant de garantir à chaque instant la présence de lubrifiant en tout point du roulement quelle que soit la vitesse de rotation.

La structure de l'éolienne est réalisée à partir de plusieurs sous-ensembles qui peuvent être reliés au niveau de plans de joint constitués par des brides de raccordement.

Un premier sous-ensemble comporte le bâti principal 8 solidaire de la plate forme 3a et renfermant les différents composants indiqués plus haut qui est monté tournant autour d'un axe vertical sur la partie supérieure du mât 2, au niveau d'un premier plan de joint. Le premier sous-ensemble est relié à un second sous-ensemble par des brides suivant le plan de joint 11.

Le second sous-ensemble qui comporte le bâti support 9 et la génératrice 12 constituée du stator 17 et du rotor 16 et le roulement 15 est relié par des brides au premier sous-ensemble suivant le plan de joint 11 et au niveau du palier 15 à un troisième sous-ensemble qui comporte, outre le moyeu 13 et les pales 14 de la partie tournante 10, tous les éléments associés tels que les accessoires du frein aérodynamique. Les efforts exercés par le vent sur le troisième sous-ensemble sont repris par le premier sous-ensemble, par l'intermédiaire du second sous-ensemble.

Le premier sous-ensemble renferme également différents composants tels que le boîtier du convertisseur, le boîtier de commande de l'éolienne et des centrales de lubrification et de refroidissement.

La partie tournante 10 de l'éolienne est reliée à l'extrémité du bâti support 9, par l'intermédiaire du palier 15 dont les bagues interne et externe sont bridées respectivement sur la partie tournante et sur le bâti support 9.

L'ensemble, des efforts exercés sur la partie tournante est repris au niveau du palier 15, par la partie de la nacelle solidaire de la plate-forme.

## Revendications

1. Dispositif de production de courant électrique à partir d'énergie éolienne comportant un mât vertical (2) fixé sur une surface de support par une partie d'extrémité inférieure, une nacelle (3) montée rotative autour d'un axe vertical sur une partie d'extrémité supérieure du mât (2), une partie tournante (10) comprenant un moyeu (13) et au moins deux pales (14) fixées sur le moyeu (13) dans des directions sensiblement radiales, au moins un palier (15) de montage rotatif de la partie tournante (10) de la nacelle (3), ayant un axe sensiblement horizontal, une génératrice (12) de courant électrique comportant au moins un stator (17) solidaire de la nacelle (3) et au moins un rotor (16) solidaire du moyeu (13) de la partie tournante (10), par l'intermédiaire d'un élément de fixation (20) sensiblement perpendiculaire à l'axe de rotation de la partie tournante (10), **caractérisé par le fait que**:
- le rotor (16) et le stator (17) présentent chacun au moins une partie active en forme de disque portant des éléments électromagnétiques (19, 19') en vis-à-vis,
- la partie tournante (10) est montée rotative sur la nacelle (3) par l'intermédiaire d'un seul palier (15) dont le diamètre est inférieur de moins de 20 % au diamètre d'un cercle inscrit dans la section droite perpendiculaire à l'axe de la partie tournante (10) d'une surface formée par des zones de raccordement des pales (14) sur le moyeu (10), et
- l'élément de fixation (20) du rotor (16) sur le moyeu (13) est dans une disposition adjacente par rapport au palier (15), dans la direction axiale du palier (15).

2. Dispositif suivant la revendication 1, **caractérisé par le fait que** l'élément de liaison (20) du rotor (16) au moyeu (13) présente une forme annulaire et une partie interne de liaison au moyeu (13) et à une bague tournante interne du palier à roulement (15), intercalée dans la direction axiale du moyeu (13) et du palier (15), entre le moyeu (13) et le palier (15), sur lesquels l'élément de fixation (20) est fixé rigidement, par exemple par des tirants.

3. Dispositif suivant l'une quelconque des revendications 1 et 2, **caractérisé par le fait qu'**il comporte un premier sous-ensemble comprenant un bâti principal (8) monté rotatif sur la partie supérieure du mât (2), un second sous-ensemble fixé sur le premier sous-ensemble suivant un plan de joint (11), et comportant sur un bâti de support (9), la génératrice de courant électrique (12) constituée du stator (17) et du stator (16) et le palier (15), et un troisième sous-ensemble relié au second sous-ensemble au niveau du palier (15) et comportant le moyeu (13) et les pales (14) de la partie tournante (10), les trois sous-ensembles étant reliés entre eux par des brides de manière à reprendre les efforts exercés par le vent sur la partie tournante (10) sur le premier sous-ensemble par l'intermédiaire du second sous-ensemble, le premier sous-ensemble renfermant différents composants.

4. Dispositif suivant l'une quelconque des revendications 1 à 3, **caractérisé par le fait que** les parties actives en forme de disques du rotor et du stator sont séparées par un entrefer dont la longueur est réglée de manière que le stator (17) exerce sur le rotor (16) et sur la partie tournante (10) une force de direction axiale opposée à la force de direction axiale exercée par le vent sur la partie tournante (10).

5. Dispositif suivant l'une quelconque des revendications 1 à 4, **caractérisé par le fait qu'**il comporte de plus un frein mécanique (22) de la partie tournante (10) constitué par un frein à disque dont le disque est solidaire du rotor (16) de la génératrice de courant électrique (12) et qui comporte une pluralité d'étriers de freinage du disque répartis suivant la périphérie externe d'une partie d'un bâti (8) de la nacelle (3).

6. Dispositif suivant la revendication 5, **caractérisé par le fait qu'**il comporte de plus un système de freinage aérodynamique constitué par des parties d'extrémité radiale (14a) des pales (14) opposées aux extrémités des pales (14) reliées au moyeu (13) montées tournantes autour d'un axe longitudinal de la pale (14) correspondante de direction radiale et reliées à un dispositif de pivotement de la partie d'extrémité (14a) de la pale en fonction de la vitesse du vent ou de la vitesse de rotation de la partie tournante (10).

7. Dispositif suivant l'une quelconque des revendications 1 à 6, **caractérisé par le fait que** le palier (15) est un palier à roulement et que la nacelle (3) comporte un système de lubrification du palier à roulement (15).

8. Dispositif suivant l'une quelconque des revendications 1 à 7, **caractérisé par le fait que** le palier (15) est dans une disposition pratiquement adjacente par rapport au moyeu (13), dans la direction axiale, de sorte que la partie tournante (10) du dispositif est fixée sur le bâti (8) de la nacelle (3) avec un faible porte-à-faux.

9. Dispositif suivant l'une quelconque des revendications 1 à 8, **caractérisé par le fait qu'**au moins une partie active en forme de disque du rotor (16) porte des aimants permanents répartis suivant la direction circonférentielle de la partie active du rotor (16).

## Claims

1. Device for producing electric current from wind energy comprising a vertical mast (2) which is fixed on a support surface via a lower end part, a nacelle (3) which is mounted rotatably about a vertical axis on an upper end part of the mast (2), a turning part (10) comprising a hub (13) and at least two vanes (14) which are fixed on the hub (13) in substantially radial directions, at least one bearing (15) for rotatable mounting of the turning part (10) of the nacelle (3), having a substantially horizontal axis, an electric current generator (12) comprising at least one stator (17) which is integral with the nacelle (3) and at least one rotor (16) which is integral with the hub (13) of the turning part (10), by means of a fixing element (20) which is substantially perpendicular to the axis of rotation of the turning part (10), **characterised in that**:
- the rotor (16) and the stator (17) each have at least one active part in the form of a disc bearing electromagnetic elements (19, 19') which are opposite each other,
- the turning part (10) is mounted rotatably on the nacelle (3) by means of a single bearing (15), the diameter of which is smaller by less than 20% to the diameter of a circle inscribed in the straight section perpendicular to the axis of the turning part (10) of a surface formed by zones for connecting the vanes (14) on the hub (10), and
- the fixing element (20) of the rotor (16) on the hub (13) is in an adjacent disposition relative to the bearing (15), in the axial direction of the bearing (15).

2. Device according to claim 1, **characterised in that** the connecting element (20) of the rotor (16) to the hub (13) has an annular shape and an internal connecting part to the hub (13) and to an internal turning ring of the roller bearing (15), intercalated in the axial direction of the hub (13) and of the bearing (15), between the hub (13) and the bearing (15), on which the fixing element (20) is rigidly fixed, for example by means of tie rods.

3. Device according to any of the claims 1 and 2, **characterised in that** it comprises a first sub-assembly comprising a main frame (8) which is mounted rotatably on the upper part of the mast (2), a second sub-assembly which is fixed on the first sub-assembly according to a joint plane (11), and comprising on a support frame (9), the electric current generator (12), which is formed by the stator (17) and the stator (16) and the bearing (15), and a third sub-assembly which is connected to the second sub-assembly at the level of the bearing (15) and comprising the hub (13) and the vanes (14) of the turning part (10), the three sub-assemblies being connected to each other by flanges so as to take up the forces exerted by the wind on the turning part (10) on the first sub-assembly by means of the second sub-assembly, the first sub-assembly containing various components.

4. Device according to any of the claims 1 to 3, **characterised in that** the active parts in the form of discs of the rotor and of the stator are separated by an air gap, the length of which is controlled such that the stator (17) exerts, on the rotor (16) and on the turning part (10), an axial directional force which is opposite to the axial directional force exerted by the wind on the turning part (10).

5. Device according to any of the claims 1 to 4, **characterised in that** it comprises furthermore a mechanical brake (22) of the turning part (10) which is Formed by a disc brake, the disc of which is integral with the rotor (16) of the electric current generator (12) and which comprises a plurality of brake calipers of the disc which are distributed according to the external periphery of a part of a frame (8) of the nacelle (3).

6. Device according to claim 5, **characterised in that** it comprises furthermore an aerodynamic braking system formed by radial end parts (14a) of the vanes (14) which are opposite the ends of the vanes (14) which are connected to the hub (13) and mounted so as to turn about a longitudinal axis of the vane (14) corresponding to the radial direction and connected to a pivoting device of the end part (14a) of the vane as a function of the speed of the wind or of the speed of rotation of the turning part (10).

7. Device according to any of the claims 1 to 6, **characterised in that** the bearing (15) is a roller bearing and **in that** the nacelle (3) comprises a system for lubrication of the roller bearing (15).

8. Device according to any of the claims 1 to 7, **characterised in that** the bearing (15) is in a disposition practically adjacent relative to the hub (13), in the axial direction, such that the turning part (10) of the device is fixed on the frame (8) of the nacelle (3) with a slight overhang.

9. Device according to any of the claims 1 to 8, **characterised in that** at least one active part in the form of a disc of the rotor (16) bears permanent magnets which are distributed according to the circumferential direction of the active part of the rotor (16).

## Patentansprüche

1. Vorrichtung zur Erzeugung elektrischen Stroms aus Windenergie, mit einem senkrechten Mast (2), der durch einen unteren Endbereich auf einer Tragfläche befestigt ist, mit einer Gondel (3), die schwenkbar um eine senkrechte Achse auf einem oberen Endbereich des Mastes (2) angebracht ist, mit einem sich drehenden Teil (10), der eine Nabe (13) und mindestens zwei Flügel (14) aufweist, die in im Wesentlichen radialen Richtungen auf der Nabe (13) befestigt sind, mit mindestens einem Drehlager (15) für den sich drehenden Teil (10) der Gondel (3), die eine im Wesentlichen horizontale Achse aufweist, mit einem elektrischen Stromerzeuger (12), der mindestens einen mit der Gondel (3) fest verbundenen Stator (17) und mindestens einen Rotor (16) aufweist, der durch ein Befestigungselement (20), das im Wesentlichen senkrecht zur Drehachse des sich drehenden Teils (10) ist, fest mit der Nabe (13) des sich drehenden Teils (10) verbunden ist, **dadurch gekennzeichnet, dass**:
- der Rotor (16) und der Stator (17) jeweils mindestens einen aktiven scheibenförmigen Bereich aufweisen, der sich gegenüberliegende elektromagnetische Elemente (19, 19') trägt,
- der sich drehende Teil (10) schwenkbar auf der Gondel (3) angebracht ist, durch ein einziges Lager (15), dessen Durchmesser um mindestens 20 % geringer ist, als der Durchmesser eines Kreises, der in einem rechten Segment eingeschrieben ist, das senkrecht zur Achse des sich drehenden Teils (10) einer Fläche steht, die von Anschlusszonen der Flügel (14) auf der Nabe (13) gebildet wird, und
- das Befestigungselement (20) des Rotors (16) auf der Nabe (13) in Bezug auf das Lager (15) in axialer Richtung des Lagers (15) benachbart angeordnet ist.

2. Vorrichtung nach Anspruch 1, **dadurch gekennzeichnet, dass** das Befestigungselement (20) des Rotors (16) an der Nabe (13) ringförmig ist und einen Innenbereich der Verbindung der Nabe (13) aufweist, der einem inneren Drehring des Wälzlagers (15) in axialer Richtung der Nabe (13) und des Lagers (15) zwischen der Nabe (13) und dem Lager (15) zwischengeschaltet ist, auf denen das Befestigungselement (20), zum Beispiel durch Bolzen, steif befestigt ist.

3. Vorrichtung nach einem der Ansprüche 1 und 2, **dadurch gekennzeichnet, dass** sie eine erste Untereinheit mit einem Hauptgestell (8), das schwenkbar auf dem oberen Bereich des Mastes (2) angebracht ist und eine zweite Untereinheit, die auf der ersten Untereinheit entlang einer Trennebene (11) befestigt ist und den aus dem Stator (17), dem Rotor (16) und dem Lager (15) bestehenden elektrischen Stromerzeuger (12) auf einem Traggestell (9) aufweist, sowie eine dritte Untereinheit aufweist, die auf Höhe des Lagers (15) mit der zweiten Untereinheit verbunden ist und die Nabe (13) und die Flügel (14) des sich drehenden Teils (10) aufweist, wobei die drei Untereinheiten durch Flansche so miteinander verbunden sind, dass sie die auf den sich drehenden Teil (10) durch den Wind ausgeübten Kräfte mittels der zweiten Untereinheit auf die erste Untereinheit aufnehmen, wobei die erste Untereinheit verschiedene Bestandteile umschließt.

4. Vorrichtung nach einem der Ansprüche 1 bis 3, **dadurch gekennzeichnet, dass** die aktiven scheibenförmigen Bereiche des Rotors und des Stators durch einen Luftspalt getrennt sind, dessen Länge so geregelt ist, dass der Stator (17) auf den Rotor (16) und den sich drehenden Teil (10) eine Kraft von axialer Richtung ausübt, die entgegengesetzt der Kraft von axialer Richtung ist, die vom Wind auf den sich drehenden Teil (10) ausgeübt wird.

5. Vorrichtung nach einem der Ansprüche 1 bis 4, **dadurch gekennzeichnet, dass** sie ferner eine mechanische Bremse (22) des sich drehenden Teils (10) aufweist, die von einer Scheibenbremse gebildet wird, dessen Scheibe fest mit dem Rotor (16) des elektrischen Stromerzeugers (12) verbunden ist und die mehrere Scheibenbremssättel aufweist, die entlang des äußeren Umfangs eines Bereiches des Gestells (8) der Gondel (3) verteilt sind.

6. Vorrichtung nach Anspruch 5, **dadurch gekennzeichnet, dass** sie ferner ein aerodynamisches Bremssystem aufweist, das von radialen Endbereichen (14a) der Flügel (14) gebildet wird, die den mit der Nabe (13) verbundenen Enden der Flügel (14) entgegengesetzt sind, die drehbar um eine Längsachse des Flügels (14) entsprechend einer radialen Richtung angebracht sind und mit einer Schwenkvorrichtung des Endbereiches (14a) des Flügels in Abhängigkeit des Windes oder der Drehgeschwindigkeit des sich drehenden Teils (10) verbunden ist.

7. Vorrichtung nach einem der Ansprüche 1 bis 6, **dadurch gekennzeichnet, dass** das Lager (15) ein Wälzlager ist und dass die Gondel (3) ein Schmierungssystem des Wälzlagers (15) aufweist.

8. Vorrichtung nach einem der Ansprüche 1 bis 7, **dadurch gekennzeichnet, dass** das Lager (15) in Bezug auf die Nabe (13) in axialer Richtung benachbart angeordnet ist, so dass der sich drehende Teil (10) der Vorrichtung auf dem Gestell (8) der Gondel (3) leicht vorstehend befestigt ist.

9. Vorrichtung nach einem der Ansprüche 1 bis 8, **dadurch gekennzeichnet, dass** mindestens ein aktiver scheibenförmiger Bereich des Rotors (16) Dauermagneten trägt, die entlang der Umfangsrichtung des aktiven Bereiches des Rotors (16) verteilt sind.
